# EUROPEAN PATENT APPLICATION

(11) **EP 4 296 176 A1**
(43) Date of publication of application: **27.12.2023**
(21) Application number: 22180962.7
(22) Date of filing: 24.06.2022
(51) Int. Cl.: B65B 25/00, B65B 55/18, B65B 37/02, B65B 37/16, A23L 3/3409, A23L 3/3445

(54) **DEVICE AND METHOD FOR TRANSPORTING A FOOD PRODUCT**

(71) Applicant: Faber S.r.l., 24045 Fara Gera d'Adda (BG) (IT)
(72) Inventor: AGAZZI, Flavio Omar Enrico, 24045 Fara Gera d'Adda Bergamo (IT)
(74) Representative: Chimini, Francesco

(57) **Abstract**

A device for transporting a food product comprises a first transport chamber (12), a filter (24), a discharge valve (26) operatively connected to a product outlet opening (28) and electronically controllable to switch between a closed position and an open position for discharging a quantity of food product into a receiving plant (30). The device is further equipped with ozonising means (32) suitable for generating an ozone flow and comprising insufflation means (34) suitable for insufflating said ozone flow into the transport chamber. An electronic control unit (36) is configured to control the discharge valve (26) and the flow of insufflated ozone into the transport chamber (12). [Fig. 1]

## Description

The present invention relates to a device and method for transporting a food product, for example grated cheese.

As is known, in some food packaging plants, particularly grated cheese, the product must be transferred from a storage station, or leaving a processing plant, to the packaging line that is responsible for placing a quantity of product into the relevant package.

During the transport cycle from the storage container or the processing plant to packaging, the food product, which already has impurities by its nature, may also become a vehicle for viruses, bacteria, spores, fungi, or other microorganisms that are harmful to humans and that affect the determination of the shelf life of the product and thus the expiration date by which the product must be consumed.

The object of the present invention is to propose a device and method for transporting food products capable of drastically reducing the presence of microorganisms on the food product, greatly increasing its shelf life.

Said object is achieved with a transport device according to claim 1 and a transport method according to claim 7. The dependent claims describe preferred or advantageous embodiments of the device and method according to the invention.

The features and the advantages of the device and method for transporting food products according to the invention will still be evident from the following description of preferred embodiments thereof, provided purely by way of non-limiting example, with reference to the accompanying drawings, wherein:

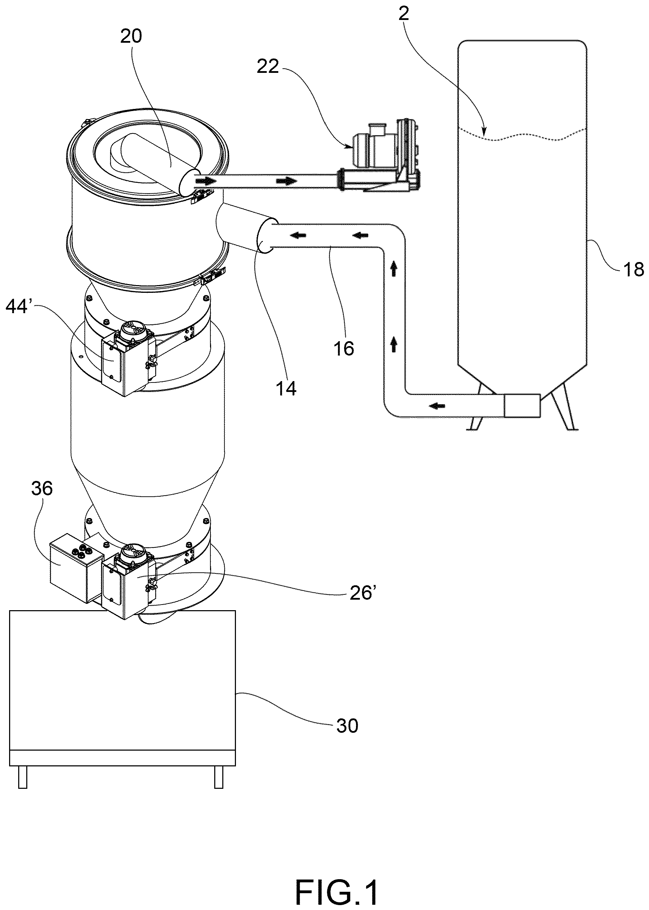

- Fig. 1 shows a part of a food product packaging plant that includes the transport device according to the invention, in one of the embodiments thereof; and

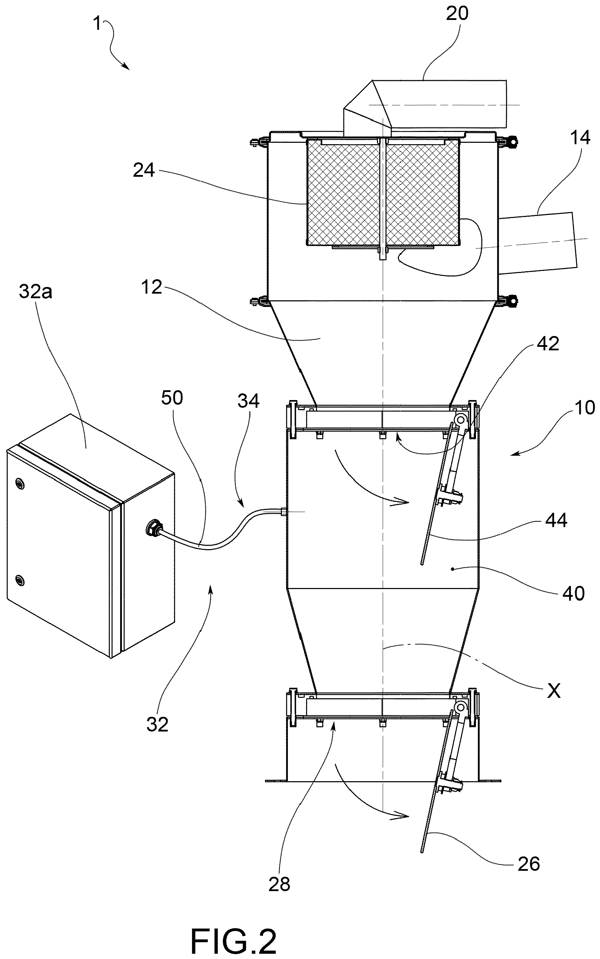

- Fig. 2 is a view in partial axial section of the transport device alone with both food product discharge valves open.

In said drawings, reference number 1 denotes a device for transporting food products 2, for example food products in powder or in various sizes, for example grated cheese, according to the invention as a whole.

In a general embodiment, the transport device 1 comprises a device body 10 that develops around a vertical device axis (X) . The device body 10 forms at least one first transport chamber 12.

For example, the first transport chamber 12 has a hopper shape.

The first transport chamber 12 is provided with, or fluidly communicates with, a product inlet port 14, suitable for connection to a product supply line 16 that may come from a product storage station 18 - as shown in the drawings - or from a processing plant.

The first transport chamber 12 is further provided with, or fluidly communicates with, a suction port 20, suitable for connection to a suction pump 22.

A filter 24 is operatively coupled to the suction port 20 to prevent the suction of the food product into the suction port 20.

Thus, the food product is loaded into the first transport chamber 12 by suction from the product storage station 18 or from a processing plant.

The transport device 1 is equipped with a discharge valve 26 operatively connected to a product outlet opening 28 obtained in the device body 10.

The discharge valve 26 is electronically controllable, for example by means of a discharge valve actuator 26', to switch between a closed and an open position. When the discharge valve 26 is in the closed position, the food product is retained in the device body; when the discharge valve 26 is in the open position, a quantity of food product is discharged, e.g. by gravity, into a receiving system 30, for example placed under the transport device 1.

The transport device 1 is further provided with ozonising means 32 suitable for generating a flow of ozone to sanitize the food product. The ozonising means 32 comprise insufflation means 34 suitable to insufflate the ozone into at least one transport chamber (the first transport chamber 12 and/or another transport chamber in which the food product travels, as described below).

The transport device 1 further comprises an electronic control unit 36 configured to control the discharge valve 26, i.e. the respective electric actuator 26' and the flow of ozone insufflated into at least one transport chamber 12.

In one embodiment, the device body 10 further forms a second transport chamber 40.

The first transport chamber 12 is vertically superimposed on the second transport chamber 40.

The first transport chamber 12 is connected to the second transport chamber 40 through an intermediate opening 42.

An intermediate valve 44 is operatively connected to the intermediate opening 42, the intermediate valve being controllable electronically, for example by means of an intermediate electric valve actuator 44', by the electronic control unit 36 to switch between a closed and an open position. When it is in the closed position, the first transport chamber 12 and the second transport chamber 40 are fluidly separated from each other. Thus, when the intermediate valve 44 is in this position, there is no transit of food product from the first transport chamber 12 to the second transport chamber 40. When the intermediate valve is in the open position, the quantity of food product contained in the first transport chamber 12 may be discharged, for example by gravity, into the second transport chamber.

In this embodiment, the product outlet opening 28 is formed in the second transport chamber 40.

In one embodiment, the second transport chamber 40 also has a hopper shape.

In one embodiment, the insufflation means 34 are suitable for insufflating the flow of ozone into the second transport chamber 40.

In one embodiment, the electronic control unit 36 is configured to activate the ozone insufflation in the second transport chamber 40 while the intermediate valve 44 is closed and while suction of the food product into the first transport chamber 12 takes place.

Specifically, the electronic control unit 36 is configured for:
- keeping the intermediate valve 44 closed for a suction time interval (T1);
- at the end of the suction time interval (T1), commanding the opening of the intermediate valve 44 for an intermediate valve opening time interval (T2) and commanding the insufflation of ozone into the second transport chamber 40 with the discharge valve 26 closed for an insufflation time interval (T3) greater than the intermediate valve opening time interval (T2);
- at the end of the intermediate valve opening time interval (T2), commanding the closing of the intermediate valve 44 so as to allow the suction of food product into the first transport chamber 12, while the ozonation of the food product takes place in the second transport chamber 40;
- at the end of the insufflation time interval (T3), commanding the opening of the discharge valve 26 for a discharge valve opening time interval (T4) with the intermediate valve closed.

In said embodiment, the transport time of the food product is thus optimized and reduced, as the movement of the food product from the storage station 18 or from the processing plant to the transport device 1 may take place while the transport device is still sanitizing another quantity or volume of food product.

In one embodiment, the ozonising means 32 are placed outside the device body 10. In this case, the insufflation means 34 comprise an ozone supply tube 50 leading into at least one transport chamber 12; 40.

The ozonising means 32 may be obtained with an industrial-type ozone generator 32a.

In one embodiment, the insufflation means 34 are positioned so that a flow of ozone hits the food product as it travels by gravity through at least one transport chamber 12; 40.

In this way, the food product is sanitized more completely and uniformly with respect to a sanitization that occurs when the food product has fully settled and compacted in a transport chamber.

For example, the insufflation means 34 are arranged so that the ozone flow is delivered in a radial direction with respect to the device axis X and immediately below the intermediate valve 44.

Also a subject of the present invention is a method for transporting food products, such as grated cheese.

The method may be, but is not necessarily, implemented with the transport device described above.

The method involves drawing a quantity or volume of food product from a storage station or a processing plant into a transport chamber, subjecting the product contained in the transport chamber to an ozone treatment, and discharging the ozone-treated product into a packaging plant.

In one embodiment employing a first transport chamber 12 and a second transport chamber 40 operatively connected to each other, the ozone treatment of a first quantity of food product may be carried out in the second transport chamber 40, while a second quantity of food product is drawn into the first transport chamber 12.

In one embodiment, the method comprises the steps of:
- fluidly separating the first transport chamber 12 from the second transport chamber 40;
- drawing a first quantity of food product into the first transport chamber 12 by suction;
- discharging, by gravity, the first quantity of food product from the first transport chamber 12 into the second transport chamber 40;
- subjecting the first quantity of food product to the ozone treatment;
- separating again the first transport chamber 12 from the second transport chamber 40;
- drawing a second quantity of food product into the first transport chamber 12 by suction, while the ozone treatment of the first quantity of food product takes place in the second transport chamber 40;
- upon completion of the ozone treatment, discharging the first quantity of food product to a packaging plant.

In one embodiment, the food product is hit by a flow of ozone as the product transits by gravity from the first transport chamber 12 to the second transport chamber 40.

It has been proven that the treatment of the food product by ozone allows to significantly increase the shelf life of the product , without altering its organoleptic characteristics.

The ozone treatment is integrated into the same transport device, which in any case must be present in the packaging plant. The overall dimensions of the system are not appreciably changed.

Due to the use of two transport chambers that may operate in parallel, the ozone treatment significantly alters the productivity of the packaging plant.

It should be noted that most of the microorganisms that ozone is able to kill are eliminated within a few seconds, or at most a few tens of seconds, of contact with ozone.

In any case, the proposed ozone treatment method is safe for operators because the ozone is insufflated inside the transport device.

In addition, ozone may be generated at low cost and may be produced on site, thus avoiding handling dangerous or toxic substances and incurring storage, ordering, and transportation costs.

A person skilled in the art may, to the embodiments of the transport device and of the method according to the invention, in order to meet contingent needs, make changes, adaptations, and replacements of elements with functionally equivalent ones without departing from the scope of the following claims. Each of the features described as belonging to a possible embodiment may be obtained independently of the other embodiments described.

## Claims

1. A food product transport device, comprising:
- a device body (10), which develops around a vertical device axis (X) and forms at least a first transport chamber (12),
- a product inlet port (14), open into the first transport chamber (12) and suitable for connection to a product supply line (16) coming from a product storage station (18) or from a processing plant;
- a suction port (20), fluidly communicating with the first transport chamber (12) and suitable for connection to a suction pump (22);
- a filter (24), operatively coupled to the suction port (20) to prevent the suction of the food product into the suction port;
- a discharge valve (26), operatively connected to a product outlet opening (28) obtained in the device body (10) and electronically controllable to switch between a closed position and an open position for discharging a quantity of food product into an underlying receiving system (30);
- ozonising means (32), suitable for generating an ozone flow and comprising insufflation means (34), suitable for insufflating said ozone flow into at least one transport chamber;
- an electronic control unit (36), configured to control the discharge valve (26) and the ozone flow insufflated into the transport chamber (12).

2. The device according to claim 1, wherein the device body (10) further forms a second transport chamber (40), the first transport chamber (12) being vertically superimposed on the second transport chamber (40), and wherein:
- the first transport chamber (12) is connected to the second transport chamber (40) through an intermediate opening (42);
- an intermediate valve (44) that is electronically controllable by the electronic control unit (36) is operatively connected to the intermediate opening (42) to switch between a closed position and an open position for discharging a quantity of food product from the first transport chamber (12) to the second transport chamber (40) ;
- the outlet opening (28) is obtained in the second transport chamber (40);
- the insufflation means (34) are suitable for insufflating the ozone flow into the second transport chamber (40).

3. The device according to claim 2, wherein the electronic control unit (36) is configured to activate the ozone insufflation into the second transport chamber (40) while the intermediate valve (44) is closed and while the food product is drawn into the first transport chamber (12) by suction.

4. The device according to claim 2 or 3, wherein the electronic control unit (36) is configured for:
- keeping the intermediate valve (44) closed for a suction time interval (T1);
- at the end of the suction time interval (T1), commanding the opening of the intermediate valve (44) n for an intermediate valve opening time interval (T2) and commanding the ozone insufflation into the second transport chamber (40) with the discharge valve (26) closed for an insufflation time interval (T3) greater than the intermediate valve opening time interval (T2);
- at the end of the intermediate valve opening time interval (T2), commanding the closing of the intermediate valve (44) so as to allow the suction of the food product into the first transport chamber (12), while the ozonation of the food product takes place in the second transport chamber (40);
- at the end of the insufflation time interval (T3), commanding the opening of discharge valve (26) for a discharge valve opening time interval (T4) with the intermediate valve closed.

5. The device according to any of the preceding claims, wherein the ozonising means (32) are placed externally to the device body (10) and wherein the insufflation means (34) comprise an ozone supply tube (50) leading into at least one transport chamber (12; 40).

6. The device according to any of the preceding claims, wherein the insufflation means (44) are positioned such that an ozone flow hits the food product as it transits by gravity through the at least one transport chamber (12; 40).

7. A method for transporting food products, comprising the steps of:
- drawing a predetermined quantity of food product from a storage station into a transport chamber (12; 40) by suction;
- subjecting the product contained in the transport chamber (12; 40) to an ozone treatment;
- discharging the ozone-treated product to a packaging plant.

8. The method according to claim 7, which uses a first transport chamber (12) and a second transport chamber (40) operatively connected to each other, the ozone treatment of a first quantity of food product being carried out in the second transport chamber (40), while in the first transport chamber (12) a second quantity of food product is drawn in by suction.

9. The method according to claim 8, comprising the steps of:
- fluidly separating the first transport chamber (12) from the second transport chamber (40);
- drawing a first quantity of food product into the first transport chamber (12) by suction;
- discharging, by gravity, the first quantity of food product from the first transport chamber (12) into the second transport chamber (40);
- subjecting the first quantity of food product to the ozone treatment;
- separating again the first transport chamber (12) from the second transport chamber (40);
- drawing a second quantity of food product into the first transport chamber (12) by suction, while the ozone treatment of the first quantity of food product takes place in the second transport chamber (40);
- at the end of the ozone treatment, discharging the first quantity of food product into a packaging plant.

10. The method according to claim 9, wherein the food product is hit by a flow of ozone as the food product transits by gravity from the first transport chamber (12) to the second transport chamber (40).

11. The method according to any of claims 7-10, wherein the food product is grated cheese.
